# FASCICULE DE BREVET EUROPEEN

(11) **EP 1 846 668 B1**
(45) Date de publication et mention de la délivrance du brevet: **02.06.2010**
(21) Numéro de dépôt: 05818941.6
(22) Date de dépôt: 16.11.2005
(51) Int. Cl.: F16F 1/38

(54) **DISPOSITIF DE SUPPORT D'UNE BOITE DE VITESSES POUR VEHICULE AUTOMOBILE**
VORRICHTUNG ZUM TRAGEN EINES GETRIEBES FÜR EIN KRAFTFAHRZEUG
DEVICE FOR SUPPORTING A GEARBOX FOR A MOTOR VEHICLE

(30) Priorité: 18.11.2004 FR 0452669
(43) Date de publication de la demande: 24.10.2007
(73) Titulaire: RENAULT S.A.S., 92100 Boulogne Billancourt (FR)
(72) Inventeur: VIVERO, François, F-78150 LE CHESNAY (FR)
(74) Mandataire: Guyon, Rodolphe C.
(86) Numéro de dépôt international: PCT/FR2005/050953
(87) Numéro de publication internationale: WO 2006/054019

(56) Documents cités:
- FR-A- 2 668 102
- FR-A- 2 769 266

## Description

La présente invention concerne un dispositif de support d'une boîte de vitesses pour véhicule automobile, comprenant au moins une base qui intègre un élément amortisseur apte à coopérer avec la boîte de vitesses, cette base étant solidarisée à une paroi d'un élément structurel du véhicule de sorte que l'élément amortisseur soit positionné à l'intérieur de l'élément structurel.

Un tel dispositif est décrit dans le document FR 2 668 102 A.

Afin de répondre aux critères imposés par les normes relatives au choc piéton et de permettre une descente du capot suffisante, les constructeurs cherchent à diminuer l'encombrement dans le coffre moteur, et cherchent en particulier à baisser tous les points durs pouvant entraver cette descente du capot.

Classiquement, une boîte de vitesses est solidarisée à la structure du véhicule par un élément support qui assure le lien structurel entre la boîte et un longeron. Un tampon amortisseur fixé à cet élément support est intercalé au niveau du montage de la boîte de vitesses, afin de ne pas faire passer les bruits de la boîte de vitesses vers le longeron avant et la structure du véhicule. Or, cet élément support et ce tampon, situées classiquement verticalement au moins en partie au dessus du longeron, entravent la descente du capot.

Il est alors connu des supports de boîte de vitesses fixés sur la face interne de la paroi verticale du longeron. Cette disposition permet d'intégrer une partie du tampon de boîte de vitesse dans le longeron, mais il en résulte un problème vibratoire important car cette face verticale n'est pas suffisamment rigide.

La présente invention vise à proposer un dispositif de support d'une boîte de vitesse qui d'une part ne gène pas la descente du capot après un choc piéton, et qui est d'autre part solidarisé au longeron de manière rigide, de sorte de ne pas générer de problèmes vibratoires.

En réponse à des objectifs que l'on retrouve invariablement chez les différents constructeurs automobiles, la présente invention se veut également peu coûteuse et peu encombrante.

Pour répondre à ces objectifs, l'invention propose un dispositif de support tel que précédemment cité, **caractérisé en ce que** la base est formée d'une part d'un élément plan solidaire d'une première paroi de l'élément structurel, et d'autre part d'au moins une patte de fixation solidaire d'une deuxième paroi de l'élément structurel sensiblement perpendiculaire à la première paroi.

Selon différentes caractéristique de la présente invention :
- la première paroi de l'élément structurel est disposée dans un plan sensiblement vertical.
- l'élément plan de la base est positionné contre la face externe de la première paroi, l'élément amortisseur étant logé à l'intérieur de l'élément structurel.
- la patte de fixation est positionnée contre la face interne de la deuxième paroi, ou contre la face externe de cette deuxième paroi.
- la deuxième paroi est la paroi supérieure du longeron.
- l'élément plan est prolongé par une portion cylindrique s'étendant selon une première direction perpendiculaire à l'élément plan, de sorte que l'élément amortisseur est guidé par cette portion cylindrique.
- la patte de fixation prolonge selon la première direction la partie supérieure de la portion cylindrique.

L'invention vise à protéger également une structure avant de véhicule automobile, **caractérisé en ce qu**'un dispositif de support selon l'invention est solidarisé à un longeron avant du véhicule, de sorte que l'élément amortisseur est logé à l'intérieur de ce longeron avant, et en ce qu'une extrémité de la boîte de vitesses est inséré dans cet élément amortisseur à l'intérieur du longeron avant.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un support de boîte selon un premier mode de réalisation de l'invention ;
- la figure 2 est une représentation en coupe du support représenté à la figure 1 et intégré dans un longeron de véhicule automobile selon un premier mode de réalisation ;
- la figure 3 est une représentation schématique du premier mode réalisation du support représenté à la figure 1, vue de l'extérieur du longeron.

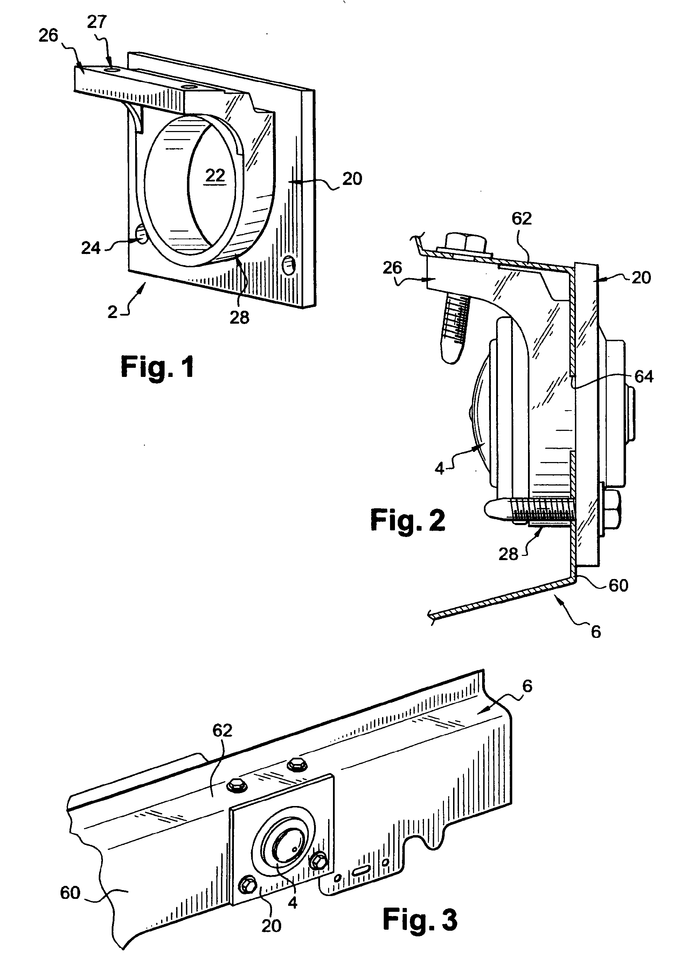

Tel que représenté à la figure 1, un support 2 de boîte de vitesses est formé d'un élément plan 20 dans lequel est aménagée une ouverture 22, dont la forme est apte à coopérer avec un élément amortisseur 4. L'élément plan 20 comprend également au moins un trou de fixation 24 apte à permettre le vissage de l'élément plan 20 sur une première paroi 60 de l'élément structurel 6 du véhicule.

Selon l'invention, le support 2 comporte au moins une patte de fixation 26 qui s'étend selon une première direction perpendiculaire à l'élément plan 20. Cette patte de fixation 26 comporte au moins un trou de fixation 27 apte à permettre le vissage du support 20 sur une deuxième paroi 62 sensiblement perpendiculaire à la première paroi 60. L'ensemble formé par l'élément plan 20 et la patte de fixation 26 prend alors la forme d'une équerre fixée sur deux parois perpendiculaires continues de l'élément structurel 6, l'élément plan 20 assurant en outre le guidage et le support du tampon amortisseur 4 par l'intermédiaire duquel la boîte de vitesses, non représentée, va être montée.

A cet effet, et tel que représenté à titre d'exemple sur les figures, une portion cylindrique 28 prolonge l'élément plan 20, autour de l'ouverture 22 et selon la première direction perpendiculaire à l'élément plan 20. Cette portion cylindrique 28 sert alors de butée pour la mise en position correcte de l'élément amortisseur 4 à travers l'ouverture 22 formée de l'élément plan 20. Une deuxième ouverture 64 est formée dans la première paroi 60 du longeron 6, de sorte que cette deuxième ouverture 64 corresponde avec l'ouverture 22 formée dans l'élément plan 20, et que l'élément amortisseur 4 puisse être guidé à travers le longeron 6 et le support 2.

Il sera compris que selon l'invention, la patte de fixation 26 peut être un prolongement d'une partie de la portion cylindrique 28 selon la première direction, et par exemple un prolongement de la partie supérieure de la portion cylindrique 28, ou être un prolongement de l'élément plan 20 selon cette première direction, indépendamment de la portion cylindrique 28.

Tel que représenté sur les figures 2 et 3, l'élément plan 20 est positionné contre la face externe de la première paroi verticale 60 du longeron 6, la face externe de la première paroi 60 étant orientée à l'extérieur du longeron 6. Dans le même temps, la patte de fixation 26 est positionnée contre la face interne de la deuxième paroi 62, perpendiculaire à la première paroi 60. La face interne de la deuxième paroi 62 est orientée à l'extérieur du longeron 6, une majeure partie du support 2, et de l'élément amortisseur 4, étant ainsi intégrée dans le longeron 6. Un tel agencement permet d'optimiser l'espace disponible dans la zone du bloc moteur et de la boîte de vitesse associée. Ce type d'agencement est réalisable du fait que les dimensions de la patte de fixation 26 sont telles que cette patte peut être glissé à l'intérieur du longeron 6 par la deuxième ouverture 64. Un tel agencement permet ainsi de diminuer ainsi en partie le nombre d'éléments présents dans une zone sensible pour le choc piéton, tout en conservant une simplicité de montage.

Avantageusement, la deuxième paroi 62, sur laquelle est fixée la patte de fixation 26, est la paroi supérieure du longeron 6. En effet, les efforts créés par le moteur et la boîte de vitesses ont tendance à tirer l'ensemble vers le bas et une fixation sur la partie supérieure du longeron 6 est plus efficace.

Dans les différents cas évoqués ci-dessus, des supports de rigidification indépendants, classiquement utilisés en nombre dans les longerons au niveau du support de boîte de vitesses, ne sont plus nécessaires. Il sera compris que le support selon l'invention peut être fixé sur les faces externes de la première paroi 60 verticale et de la deuxième paroi 62 perpendiculaire continue. Le dimensionnement de ce support pourrait alors permettre de se passer des supports de rigidification indépendants et interne au longeron.

L'invention présente un avantage acoustique propre, résultant du compactage de l'ensemble et de la diminution du moment entre le point d'entrée du bruit, généré par la boîte et le moteur, et le centre de gravité du longeron.

L'invention n'est nullement limitée au mode de réalisation décrit et illustré qui n'a été donné qu'à titre d'exemple.

## Revendications

1. Dispositif de support (2) d'une boîte de vitesses pour véhicule automobile, comprenant au moins une base qui intègre un élément amortisseur (4) apte à coopérer avec la boîte de vitesses, cette base étant solidarisée à une paroi (60, 62) d'un élément structurel (6) du véhicule de sorte que l'élément amortisseur (4) soit positionné à l'intérieur de l'élément structurel (6), **caractérisé en ce que** la base est formée d'une part d'un élément plan (20) solidaire d'une première paroi (60) de l'élément structurel (6), et d'autre part d'au moins une patte de fixation (26) solidaire d'une deuxième paroi (62) de l'élément structurel (6) sensiblement perpendiculaire à la première paroi (60).

2. Dispositif selon la revendication 1, **caractérisé en ce que** la première paroi (60) de l'élément structurel (6) est disposée dans un plan sensiblement vertical.

3. Dispositif selon la revendication 1 ou 2, **caractérisé en ce que** l'élément plan (20) de la base est positionné contre la face externe de la première paroi (60), l'élément amortisseur (4) étant logé à l'intérieur de l'élément structurel (6).

4. Dispositif selon l'une des revendications 1 à 3, **caractérisé en ce que** la patte de fixation (26) est positionnée contre la face interne de la deuxième paroi (62).

5. Dispositif selon l'une des revendications 1 à 3, **caractérisé en ce que** la patte de fixation (26) est positionnée contre la face externe de la deuxième paroi (62).

6. Dispositif selon l'une des revendications 4 ou 5, **caractérisé en ce que** la deuxième paroi (62) est la paroi supérieure du longeron (6).

7. Dispositif selon l'une des revendications précédentes, **caractérisé en ce que** l'élément plan (20) est prolongé par une portion cylindrique (28) qui s'étend selon une première direction sensiblement perpendiculaire à l'élément plan (20), de sorte que l'élément amortisseur (4) est guidé par cette portion cylindrique (28).

8. Dispositif selon la revendication 7, **caractérisé en ce que** la patte de fixation (26) prolonge selon la première direction la partie supérieure de la portion cylindrique (28).

9. Structure avant de véhicule automobile, **caractérisé en ce qu'**un dispositif de support selon lune des revendications 1 à 8 est solidarisé à un longeron avant (6) du véhicule, de sorte que l'élément amortisseur (4) est logé à l'intérieur de ce longeron avant (6), et **en ce qu'**une extrémité de la boîte de vitesses est inséré dans cet élément amortisseur (4) à l'intérieur du longeron avant (6).

## Claims

1. Device (2) for supporting a gearbox for a motor vehicle, comprising at least one base incorporating a damping element (4) capable of cooperating with the gearbox, said base being secured to a wall (60, 62) of a structural element (6) of the vehicle such that the damping element (4) is positioned inside the structural element (6), **characterized in that** the base is formed, on the one hand, by a planar element (20) integral with a first wall (60) of the structural element (6) and, on the other hand, at least one fixing lug (26) integral with a second wall (62) of the structural element (6), substantially perpendicular to the first wall (60).

2. Device according to Claim 1, **characterized in that** the first wall (60) of the structural element (6) is arranged in a substantially vertical plane.

3. Device according to Claim 1 or 2, **characterized in that** the planar element (20) of the base is positioned against the external face of the first wall (60), the damping element (4) being housed inside the structural element (6).

4. Device according to one of Claims 1 to 3,
**characterized in that** the fixing lug (26) is positioned against the internal face of the second wall (62).

5. Device according to one of Claims 1 to 3,
**characterized in that** the fixing lug (26) is positioned against the external face of the second wall (62).

6. Device according to one of Claims 4 or 5,
**characterized in that** the second wall (62) is the upper wall of the longitudinal member (6).

7. Device according to one of the preceding claims, **characterized in that** the planar element (20) is extended by a cylindrical portion (28) which extends in a first direction substantially perpendicular to the planar element (20), such that the damping element (4) is guided by this cylindrical portion (28).

8. Device according to Claim 7, **characterized in that** the fixing lug (26) extends the upper part of the cylindrical portion (28), in the first direction.

9. Front motor vehicle structure, **characterized in that** a support device according to one of Claims 1 to 8, is secured to a front longitudinal member (6) of the vehicle, such that the damping element (4) is housed inside this front longitudinal member (6) and **in that** one end of the gearbox is inserted into this damping element (4) inside the front longitudinal member (6).

## Patentansprüche

1. Stützvorrichtung (2) eines Kraftfahrzeuggetriebes mit mindestens einer Basis mit einem eingebauten Dämpfungselement (4), das geeignet ist, mit dem Getriebe zusammenzuwirken, wobei diese Basis fest mit einer Wand (60, 62) eines Strukturelements (6) des Fahrzeugs verbunden ist, so dass das Dämpfungselement (4) im Inneren des Strukturelements (6) positioniert ist, **dadurch gekennzeichnet, dass** die Basis einerseits aus einem ebenen Element (20), das fest mit einer ersten Wand (60) des Strukturelements (6) verbunden ist, und andererseits aus mindestens einer Pratze (26) gebildet ist, die fest mit einer im Wesentlichen senkrecht zur ersten Wand (60) verlaufenden zweiten Wand (62) des Strukturelements (6) verbunden ist.

2. Vorrichtung nach Anspruch 1, **dadurch gekennzeichnet, dass** die erste Wand (60) des Strukturelements (6) in einer im Wesentlichen vertikalen Ebene angeordnet ist.

3. Vorrichtung nach Anspruch 1 oder 2, **dadurch gekennzeichnet, dass** das ebene Element (20) der Basis gegen die Außenfläche der ersten Wand (60) positioniert ist, wobei das Dämpfungselement (4) im Inneren des Strukturelements (6) untergebracht ist.

4. Vorrichtung nach einem der Ansprüche 1 bis 3, **dadurch gekennzeichnet, dass** die Pratze (26) gegen die Innenfläche der zweiten Wand (62) positioniert ist.

5. Vorrichtung nach einem der Ansprüche 1 bis 3, **dadurch gekennzeichnet, dass** die Pratze (26) gegen die Außenfläche der zweiten Wand (62) positioniert ist.

6. Vorrichtung nach Anspruch 4 oder 5, **dadurch gekennzeichnet, dass** die zweite Wand (62) die obere Wand des Längsträgers (6) ist.

7. Vorrichtung nach einem der vorhergehenden Ansprüche, **dadurch gekennzeichnet, dass** das ebene Element (20) durch einen zylindrischen Abschnitt (28) verlängert ist, der sich in einer ersten Richtung im Wesentlichen senkrecht zum ebenen Element (20) erstreckt, so dass das Dämpfungselement (4) mittels dieses zylindrischen Abschnitts (28) geführt wird.

8. Vorrichtung nach Anspruch 7, **dadurch gekennzeichnet, dass** die Pratze (26) den oberen Teil des zylindrischen Abschnitts (28) in der ersten Richtung verlängert.

9. Kraftfahrzeugvorderstruktur, **dadurch gekennzeichnet, dass** eine Stützvorrichtung nach einem der Ansprüche 1 bis 8 fest mit einem vorderen Längsträger (6) des Fahrzeugs verbunden ist, so dass das Dämpfungselement (4) im Inneren dieses vorderen Längsträgers (6) untergebracht ist, und dass ein Ende des Getriebes in dieses Dämpfungselement (4) im Inneren des vorderen Längsträgers (6) eingeführt ist.
